(19) Europäisches Patentamt
European Patent Office
Office européen des brevets

(11) **EP 2 385 342 B1**

(12) **EUROPEAN PATENT SPECIFICATION**

(45) Date of publication and mention
of the grant of the patent:
**27.06.2018 Bulletin 2018/26**

(51) Int Cl.:
***G01B 21/04*** *(2006.01)* ***G01B 3/30*** *(2006.01)*

(21) Application number: **11158325.8**

(22) Date of filing: **15.03.2011**

(54) **Apparatus and method for calibrating a coordinate measuring apparatus**

Vorrichtung und Verfahren zur Kalibrierung einer Koordinatenmessvorrichtung

Appareil et procédé d'étalonnage d'un appareil de mesure de coordonnées

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.05.2010 NL 2004650**
**27.10.2010 NL 2005591**

(43) Date of publication of application:
**09.11.2011 Bulletin 2011/45**

(73) Proprietor: **Mitutoyo Research Center Europe B.V.**
**5684 PJ Best (NL)**

(72) Inventor: **Kazuhiko, Hidaka**
**5684 PJ Best (NL)**

(74) Representative: **Patentwerk B.V.**
**P.O. Box 1514**
**5200 BN 's-Hertogenbosch (NL)**

(56) References cited:
**EP-A2- 1 467 175      DE-A1-102008 028 986**
**US-A- 4 523 450      US-A1- 2003 038 933**
**US-A1- 2005 172 695      US-A1- 2008 123 110**

## Description

### Background of the invention

The invention concerns the calibration of a coordinate measuring apparatus. Errors prevailing in a coordinate measurement apparatus are partially caused by a probe error due to a sensitivity variation as caused by the direction of contact and the deviation of the ball, forming a part of a stylus, from the ideal sphere. In prior art calibration the sphericity and diameter of the ball are established. For this purpose an orientation of the sphere is not required. It is however not possible for test sphere as there is no address or origin for the test sphere.

Another prior art calibration method of the ball makes use of the so called 'Three ball calibration method'. This is however a complicated method and it does not follow the ISO standard for calibration. Further there are methods known to collect the measuring data at a zero force acting on the probe. However the deviation of the shape of the ball from the ideal sphere remains. This is particularly a problem for measurements in the nanometer field.

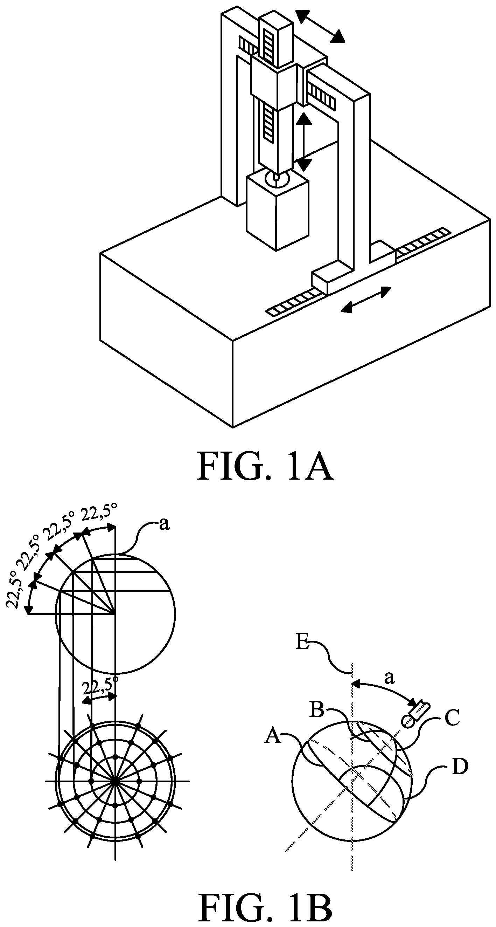

A coordinate measuring machine (CMM), as depicted in figure 1A, measures a volumetric artefact with a sensing probe. On the base of the CMM, one scale for each of the directions in the x-, y- and z-axis is installed. The probe is attached at the bottom of a z-beam which is movable in the direction of the z-axis. The three positions x, y, z on each scale are latched with a trigger from the probe when it contacts the artefact.

However the scale position and its reading do not give a proper representation of the contact position, because this information contains two systematic errors, which are the radius of the ball of the stylus which is a part of the probe, and a distance over which the indicator of the scale has travelled from the true contact until latching, the so called 'lobbing'. The scale coordinate (x, y, z) is compensated using a so called test sphere.

The contact probe can be a touch probe or a scanning probe. The scanning probe has three orthogonal axes for the displacement of the stylus. The situation of measurement with the scanning probe is more complicated than with a touching probe because of several reasons. Alignment of probe axis is one thereof. Whichever, the compensation of probe error is required as common subject. ISO Standards 10360-2 (touch probe) and 10360-4(scanning probe) define how the test sphere / master ball are used. This situation is depicted in figure 1B.

A simple method for the touch probe is as follows. Initially four points on the surface of test sphere are measured and then a centre position (x0, y0, z0) of the sphere is calculated. The half of the value of the calibrated diameter of the test sphere is subtracted from a calculated distance between the scale position and the centre position, resulting in a value to be compensated for this contact point. The equation describing this process is as follows.

$$(x-x_0)^2+(y-y_0)^2+(z-z_0)^2=(r_m+r_t)^2$$

$(x_0, y_0, z_0)$ is the centre position calculated by measurement data.

$r_m$ is a radius of the test sphere (half of diameter)
$r_t$=radius of tip - displacement from contact until latching position

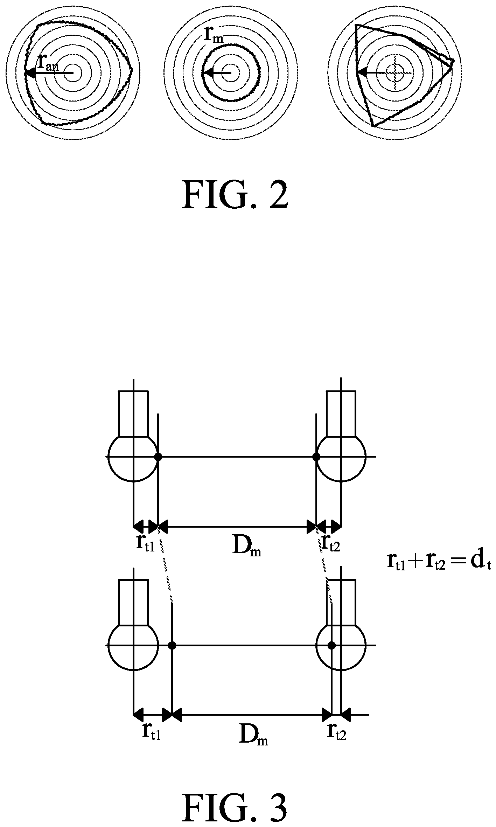

Figure 3 shows a situation when the probe measures equator of the test sphere. When the half of the value of the diameter of the test sphere $\Sigma r_m$ is subtracted from the measurement data, $Zr_{an}$ becomes $\Sigma r_t$. This family of values shows a sensing characteristic, concerning a direction of contact including a variation of the radius of the test sphere. But modern accurate probes have a small lobbing error. Therefore the variation of the radius of test sphere appears as relatively big.

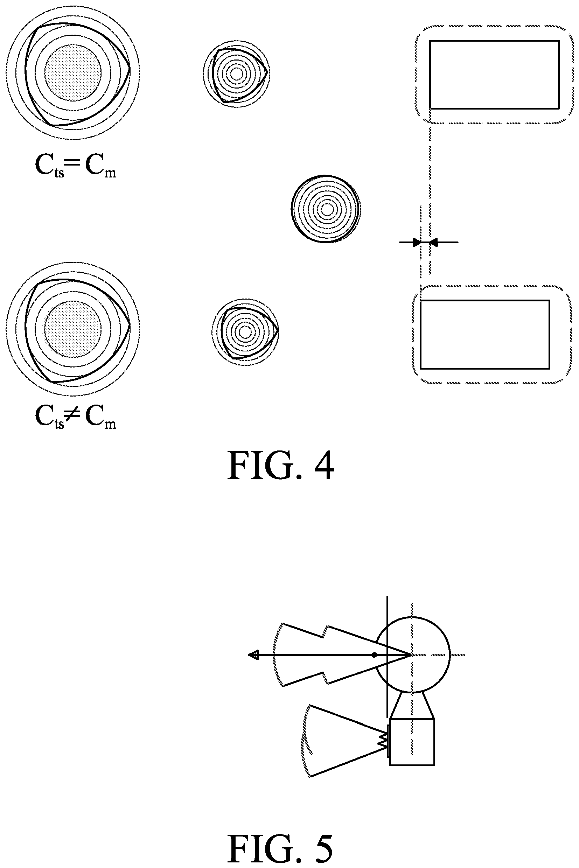

Another remarkable point is that the object of calibration of the test sphere is not a radius but a diameter. For the determination of the diameter the centre of the test sphere does not need to be defined. A symmetrical lobbing characteristic of the probe is required as otherwise the position of the centre cannot be defined as a point. When the centre has been determined, the deviation from the ideal centre does not influence the volumetric measurement. As shown in the figure 3, if '$r_{t1} + r_{t2}=d_t$' the deviated compensation value which comes from an incorrect centre position does not influence the value of '$d_m$'. This idea is applicable to 2D or 3D measurement with negligible cosign error. The position of the artefact is only moved while keeping same information of measured data of shape shown in Figure 4.

Nowadays the sphericity and diameter of the sphere can be determined with a small uncertainty by several methods, like the interference method by PTB, NIST or three ball measurement method by METAS. The purpose of calibration of the ball by PTB and NIST is to define the mass. The important information for this purpose is a volume of the ball. Orientation of the ball is not possible. The method by PTB is disclosed in the document "Measurement Science and technology Meas". Sci. Technol. 17(2006)25272539, NIST and in CIRP Annals - Manufacturing Technology, Volume 53, Issue 1, 2004, Pages 451-454.

On the other hand the purpose of calibration by METAS is to know the shape of the ball on top of stylus to reduce uncertainty. The advantage of the method is calibration on site. A disadvantage of this method is that it needs many measurements to solve the equations with many unknown factors. This is described in the 'Measurement Science and technology Meas. Sci. Technol. 18(2007)319327'.

The calibration method by METAS uses a special data acquisition method to calculate a position in which the measuring force is zero. The zero force position is calculated from the curve. There is no lobbing value as there is no travel from contact position. The method splits the radius of the tip from the lobbing value, although the method does not comply to the ISO standard.

Summary of the invention

The following description relates to an idea to realize compensation of the error caused by such a probe characteristic by using the test sphere on CMM. The test sphere has to be calibrated beforehand. Several methods have already been established as above mentioned.

The documents EP-A-1 467 175, DE-A-10 2008 028 986, US-A-2008/123110 and US-A-4 523 450 form the prior art.

EP-A-1 467 175 discloses an apparatus for calibrating a mechanical coordinate measuring machine comprising a sensing probe, wherein the apparatus comprises a test sphere, a base adapted to be fixed to a part of the coordinate measuring machine, a shaft connecting the test sphere with the base, a reference element located on a calibration master and detectable by the coordinate measuring machine and having a fixed spatial relation between the reference element and a defined origin on the surface of the test sphere.

This device known from prior art is only adapted to provide one degree of freedom for the calibration, that is in the direction of movement of the probe.

As secondary prior art US-A2003/038933 refers to a contactless sensor, in which the probe problem does not exist. US-A-2005/172 695 relates to a contactless device of another structure.

The present invention also provides a method for testing the accuracy of a coordinate measuring machine comprising a probe, the method comprising the steps of mounting an apparatus comprising a test sphere, a base adapted to be fixed to a part of the coordinate measuring machine, a shaft connecting the test sphere with the base and a reference element located on the shaft and being detectable by the coordinate measuring machine and having a fixed spatial relation between the reference element and the centre of the test sphere on the coordinate measuring machine of which the accuracy is to be tested; measuring at least three coordinates of a reference plane of the reference element; measuring the coordinates of at least four positions on the test sphere; calculating an approximation of the coordinates of the centre of the test sphere from the measurement of the at least four coordinates on the test sphere; defining an origin address on the test sphere by a geometrical information of the reference element and the calculated coordinate of the center; subtracting the calibrated radius on certain address from a distance between measured coordinate and the defined coordinate of center on CMM; defining the subtracted value as compensation value on the certain address or on approaching direction of the probe; repeating the procedure above mentioned by the address on the surface of the test sphere to define a whole compensation of the probe, wherein the actuator of the coordinate measuring machine contacts three locations of the reference plane and making the actuator shift relative to the apparatus comprising the test sphere to a determined position.

Subsequently the present invention will be elucidated with the help of the following drawings, which show:

Figure 1A : a coordinate measuring machine, which can be calibrated by the present invention;
Figure 1B : test spheres and an indication of the measuring points to be used according to the standards ISO 10360-2, 10360-4 respectively;
Figure 2 : diagrams showing a test sphere during the measurement of the equator and the possible errors;
Figure 3 : diagrams of probes and the possible errors thereof;
Figure 4 : diagrams of objects measured and the influence of artefacts caused by lack of sphericity of the probe tip used during the measurements;
Figure 5 : diagrams illustrating an example of an optical method for the sphericity calibration set up;
Figure 6 : a diagram showing an embodiment containing an alignment jig supporting to define the nominal vector;
Figure 7 : alternative embodiments of reference elements; and
Figure 8 : other alternative embodiments of reference elements.

Description of preferred embodiments of the invention

Fig. 5 illustrates an example of an optical method for the sphericity calibration set up, containing a reference surface to be the plate allowing to define the position of the origin. Every point on the sphere has individual radius because any sphere has form deviation, so called sphericity. These are also defined if the origin is defined in the coordination of CMM. The lobbing error in each direction is compensated as shown in Fig. 4. Generally, the shaft is fixed with a screw. In this case an orientation of the plate depends on the fixing method. Sometime the test sphere is fixed with a tilt of the shaft. This implies that there is no guarantee that the reference element is set with keeping an orientation for approach (The reference element may be positioned on the shaft below the sphere.) But it is not an issue here because it is easily solvable with simple jig or the set up of plural reference elements around the shaft.

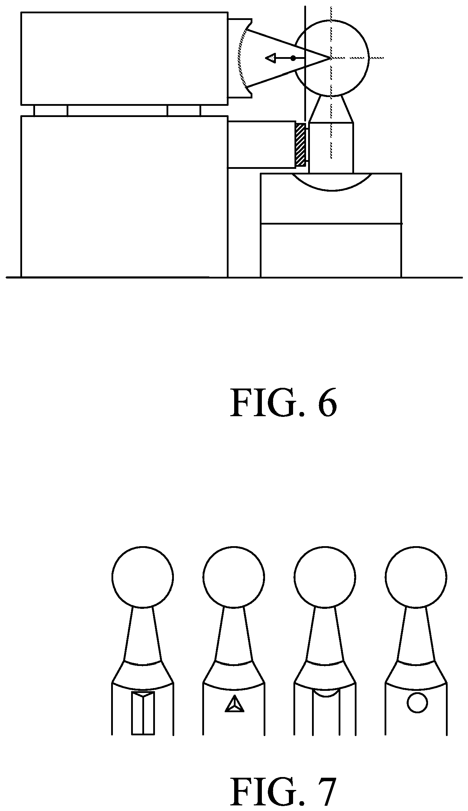

If the calibration system for the test sphere involves an alignment jig like Fig. 6, the jig helps to define the nominal vector. If the reference is a plate the nominal vector is defined automatically as 3 DOF's (degree of freedom (X $\theta$, Y $\theta$, Z $\theta$)) is fixed. Then only the linear motion for matching the nominal vector through the centre of the test sphere to the optical axis is required. The X actuator should be back to make the space for linear motion. In this case a three point measurement by optical method is unnecessary.

Fig. 7 shows another shape of reference. If the alignment jig is pair of these, it fixes not only 3 degrees of freedom but even more. For instance if the reference is a triangular prism (left in fig 7) 4 DOF's (X $\theta$, Y $\theta$, Z $\theta$ and Y) are fixed. Only linear adjustment of x and z are required in the calibration. Fig. 5 and Fig. 6 are only non claimed examples of calibration by non tactile method.

Fig. 7 illustrates other references instead of a plane (from the left; triangular prism, triangular pyramid, cylinder, ball). Any shape is possible if it can give information of the prime meridian on to the sphere.

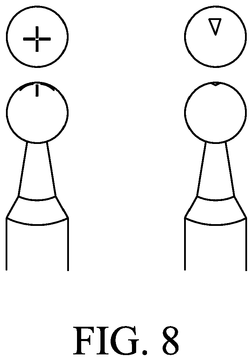

Fig. 8 illustrates other references. It is a pattern or a mark on the surface of ball. It is applied by a kind of lithography technique. The pattern is for non tactile sensor which is any optical method including triangular sensor is able to recognize the pattern. Combination of physical shape as reference and the pattern is applicable to the calibration for multi (tactile and non tactile) sensor unit.

The sphericity of the test sphere can be calibrated on the calibration set up like Fig. 6. Afterwards the test sphere is attached on the CMM for the probe calibration. Firstly the plane is defined by three point measurement of the surface of the plate. Secondly a centre position is defined by a four points measurement on the surface of the test sphere. A flat plane and the centre position are defined on the CMM. A nominal vector of the defined flat plane which involves the defined centre position determines the approaching direction of the probe to the test sphere. Then contact point is set as the origin $(x_0+r_0, y_0, z_0)$. Now the contact point and the centre position are known so that the distance between two positions can be calculated. Subtracting a radius of the origin (which is taken in test sphere calibration) from the distance becomes the compensation value at the origin. It applies to other addresses on the surface of the test sphere. If it follows ISO 103602, 25 measuring points are taken, so that 25 compensation values are taken. More data points to cover whole area of the test sphere result in a more precise compensation of characteristic of the probe. It is same for the scanning probe under ISO 10360-4. The nominal vector with the distance (half of the diameter) to the defined plane defines the origin $(x_0+r_0, y_0, z_0)$. When the sphericity of the ball is calibrated, a radius including form deviation at the origin, has been guided by same manner. Summarizing the present invention provides an apparatus and a method adapted to refer the results of the calibration to the centre of the reference element so that errors in the calibration may be assigned to the test sphere or to the probe, and to define the deviations of the test sphere from an ideal sphere more accurately.

**Claims**

1. Apparatus for calibrating a mechanical coordinate measuring machine comprising a sensing probe, wherein the apparatus comprises:

- a test sphere;
- a base adapted to be fixed to a part of the coordinate measuring machine;
- a shaft connecting the test sphere with the base,
- a reference element located on the shaft and detectable by the coordinate measuring machine and having a fixed spatial relation between the reference element and a defined origin on the surface of the test sphere, whereby the reference element comprises a reference plane having a fixed distance to the test sphere and the reference plane is adapted to be used as contact part to define an orientation of the test sphere against a measuring axis in the system to calibrate the test sphere.

2. Apparatus as claimed in claim 1, whereby the nominal vector of the surface of the test sphere which involve the defined origin passes defines the centre of the test sphere.

3. Apparatus as claimed in claim 1 or 2, whereby the reference element comprises a flat surface having a fixed distance to the defined origin on the surface of the test sphere.

4. Apparatus as claimed in claim 1, whereby the reference element has a shape defining at least two dimensions of the spatial relation between the reference element and the defined origin on the surface of the test sphere.

5. Method for testing the accuracy of a mechanical coordinate measuring machine comprising a probe, the method comprising the following steps:

- mounting an apparatus comprising a test sphere, a base adapted to be fixed to a part of the coordinate measuring machine, a shaft connecting the test sphere with the base and a reference element connected to the shaft and being detectable by the coordinate measuring machine and having a fixed spatial relation between the reference element and the centre of the test sphere on the coordinate measuring machine of which the accuracy is to be tested;
- measuring at least three coordinates of a reference plane of the reference element by contacting said reference plane;
- measuring the coordinates of at least four positions on the test sphere;
- calculating an approximation of the coordinates of the centre of the test sphere from the measurement of the at least four coordinates on the test sphere;
- defining an origin address on the test sphere by a geometrical information of the reference element and the calculated coordinate of the center;
- subtracting the calibrated radius on certain address from a distance between measured coordinate and the defined coordinate of center on CMM;
- defining the subtracted value as compensation value on the certain address or on approaching direction of the probe and;
- repeating the procedure above mentioned by the address on the surface of the test sphere to define a whole compensation of the probe;

whereby the actuator of the coordinate measuring machine contacts three locations of the reference plane a plane and making the actuator shift relative to the apparatus comprising the test sphere to a determined position.

6. Method as claimed in claim 5, whereby the coordinates of a reference element located on the test sphere are measured and the coordinates of the centre of the test sphere are calculated from the measured coordinates of the said reference element located on the test sphere.

7. Method as claimed in claim 5, whereby at least four coordinates are taken by any available sensing probe which means touch probe, scanning probe as tactile probe for CMM and non tactile probe for CMM.

**Patentansprüche**

1. Vorrichtung zur Kalibrierung einer mechanischen Koordinatenmessmaschine (CMM), mit einer Abfühlsonde, wobei die Vorrichtung enhält:

    - eine Testkugel;
    - eine Basis, die eingerichtet ist, um an einem Teil der Koordinatenmessmaschine fixiert zu werden;
    - einen Schaft, der die Testkugel mit der Basis verbindet,
    - ein Referenzelement, welches sich auf dem Schaft befindet und durch die Koordinatenmessmaschine detektierbar ist und eine fixierte räumliche Beziehung zwischen dem Referenzelement und einem definierten Ursprung auf der Oberfläche der Testkugel aufweist,

    wobei das Referenzelement eine Referenzebene mit einem fixierten Abstand zu der Testkugel umfasst, und dass die Referenzebene eingerichtet ist, um als Kontaktteil verwendet zu werden, um eine Orientierung der Testkugel gegen eine Messachse in dem System zu definieren, um die Testkugel zu kalibrieren.

2. Vorrichtung nach Anspruch 1, wobei der nominelle Vektor der Oberfläche der Testkugel, die den definierten Ursprung beinhaltet, den Mittelpunkt der Testkugel durchläuft.

3. Vorrichtung nach Anspruch 1 oder 2, wobei das Referenzelement eine flache Oberfläche mit einem fixierten Abstand zu dem definierten Ursprung auf der Oberfläche der Testkugel umfasst.

4. Vorrichtung nach Anspruch 1, wobei das Referenzelement eine Form aufweist, die mindestens zwei Dimensionen der räumlichen Beziehung zwischen dem Referenzelement und dem definierten Ursprung auf der Oberfläche der Testkugel definiert.

5. Verfahren zum Testen der Genauigkeit einer mechanischen Koordinatenmessmaschine, die eine Sonde umfasst, wobei das Verfahren die folgenden Schritte umfasst:

    - Montieren einer Vorrichtung, die eine Testkugel, eine Basis, die eingerichtet ist, um an einem Teil der Koordinatenmessmaschine fixiert zu werden, einen Schaft, der die Testkugel mit der Basis verbindet, und ein Referenzelement umfasst, welches mit dem Schaft verbunden ist und durch die Koordinatenmessmaschine detektierbar ist und eine fixierte räumliche Beziehung zwischen dem Referenzelement und dem Mittelpunkt der Testkugel auf der Koordinatenmessmaschine aufweist, deren Genauigkeit getestet werden soll;
    - Messen von mindestens drei Koordinaten einer Referenzebene des Referenzelements durch Kontaktieren der Referenzebene;
    - Messen der Koordinaten von mindestens vier Positionen auf der Testkugel;
    - Berechnen einer Näherung der Koordinaten des Mittelpunkts der Testkugel aus der Messung der mindestens vier Koordinaten auf der Testkugel;
    - Definieren einer Ursprungsadresse an der Testkugel durch geometrische Informationen des Referenzelements und der berechneten Koordinate des Mittelpunkts;
    - Subtrahieren des kalibrierten Radius an der bestimmten Adresse von einem Abstand zwischen gemessener Koordinate und der definierten Koordinate des Mittelpunkts an der CMM;
    - Definieren des subtrahierten Wertes als Kompensationswert an der bestimmten Adresse oder an der Näherungsrichtung der Sonde; und
    - Wiederholen der oben genannten Verfahrensweise durch die Adresse an der Oberfläche der Testkugel, um eine vollständige Kompensation der Sonde zu definieren;

wobei der Aktor der Koordinatenmessmaschine drei Orte der Referenzebene kontaktiert, und bewirkt wird, dass der Aktor relativ zu der Vorrichtung, die die Testkugel umfasst, zu einer ermittelten Position verschoben wird.

6. Verfahren nach Anspruch 5, wobei die Koordinaten eines Referenzelements, das sich auf der Testkugel befindet, gemessen werden, und die Koordinaten des Mittelpunkts der Testkugel aus den gemessenen Koordinaten der Referenz das Element berechnet werden, das sich auf der Testkugel befindet.

7. Verfahren nach Anspruch 5, wobei mindestens vier Koordinaten durch jedwede verfügbare Abfühlsonde genommen werden, was Berührungssonde, Abtastsonde als taktile Sonde der CMM und nichttaktile Sonde der CMM bedeutet.

## Revendications

1. Appareil destiné à étalonner une machine de mesure de coordonnées mécaniques comprenant une sonde de détection, l'appareil comprenant :

   - une sphère de test ;
   - un socle adapté pour être fixé à une partie de la machine de mesure de coordonnées ;
   - un arbre reliant la sphère de test au socle ;
   - un élément de référence situé sur l'arbre et détectable par la machine de mesure de coordonnées et ayant une relation spatiale fixe entre l'élément de référence et une origine définie sur la surface de la sphère de test,

   dans lequel l'élément de référence comprend un plan de référence ayant une distance fixe jusqu'à la sphère de test et que le plan de référence est adapté pour être utilisé comme partie de contact pour définir une orientation de la sphère de test par rapport à un axe de mesure dans le système pour étalonner la sphère de test.

2. Appareil selon la revendication 1, dans lequel le vecteur nominal de la surface de la sphère de test qui implique l'origine définie passe par le centre de la sphère de test.

3. Appareil selon la revendication 1 ou 2, dans lequel l'élément de référence comprend une surface plate ayant une distance fixe jusqu'à l'origine définie sur la surface de la sphère de test.

4. Appareil selon la revendication 1, dans lequel l'élément de référence a une forme définissant au moins deux dimensions de la relation spatiale entre l'élément de référence et l'origine définie sur la surface de la sphère de test.

5. Procédé destiné à tester la précision d'une machine de mesure de coordonnées mécaniques comprenant une sonde, le procédé comprenant les étapes suivantes :

   - monter un appareil comprenant une sphère de test, un socle adapté pour être fixé à une partie de la machine de mesure de coordonnées, un arbre reliant la sphère de test au socle et un élément de référence relié à l'arbre et étant détectable par la machine de mesure de coordonnées et ayant une relation spatiale fixe entre l'élément de référence et le centre de la sphère de test sur la machine de mesure de coordonnées dont la précision doit être testée ;
   - mesurer au moins trois coordonnées d'un plan de référence de l'élément de référence en mettant ledit plan de référence en contact ;
   - mesurer les coordonnées d'au moins quatre positions sur la sphère de test ;
   - calculer une approximation des coordonnées du centre de la sphère de test à partir de la mesure des au moins quatre positions sur la sphère de test ;
   - définir une adresse d'origine sur la sphère de test par une information géométrique de l'élément de référence et la coordonnée calculée du centre ;
   - soustraire le rayon étalonné sur une certaine adresse d'une distance entre une coordonnée mesurée et la coordonnée définie du centre sur CMM ;
   - définir la valeur soustraite comme valeur de compensation sur la certaine adresse ou sur une direction approximative de la sonde ; et
   - répéter la procédure susmentionnée par l'adresse sur la surface de la sphère de test pour définir une compensation complète de la sonde ;

   dans lequel l'actionneur de la machine de mesure de coordonnées est en contact avec trois emplacements du plan de référence et faisant se décaler l'actionneur par rapport à l'appareil comprenant la sphère de test jusqu'à une position déterminée.

6. Procédé selon la revendication 5, dans lequel les coordonnées d'un élément de référence situé sur la sphère de test sont mesurées et les coordonnées du centre de la sphère de test sont calculées à partir des coordonnées mesurées de la référence dit élément situé sur la sphère de test.

7. Procédé selon la revendication 5, dans lequel au moins quatre coordonnées sont prises par n'importe quelle sonde de détection disponible, ce qui signifie une sonde tactile, une sonde de balayage servant de sonde tactile pour CMM et une sonde non tactile pour CMM.

FIG. 1A

FIG. 1B

FIG. 2

$$r_{t1} + r_{t2} = d_t$$

FIG. 3

$$C_{ts} = C_m$$

$$C_{ts} \neq C_m$$

# FIG. 4

# FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1467175 A
- DE 102008028986 A
- US 2008123110 A
- US 4523450 A
- US 003038933 A2
- US 2005172695 A

### Non-patent literature cited in the description

- Measurement Science and technology Meas. *Sci. Technol.,* 2006, vol. 17, 25272539
- NIST and in CIRP Annals - *Manufacturing Technology,* 2004, vol. 53 (1), 451-454
- Measurement Science and technology. *Meas. Sci. Technol.,* 2007, vol. 18, 319327